# EUROPÄISCHE PATENTSCHRIFT

(11) **EP 0 379 986 B1**
(45) Veröffentlichungstag und Bekanntmachung des Hinweises auf die Patenterteilung: **29.03.1995**
(21) Anmeldenummer: 90101074.4
(22) Anmeldetag: 19.01.1990
(51) Int. Cl.: G01M 3/32

(54) **Verfahren zur Reduzierung der Messzykluszeit und zur Erhöhung der Druckmessempfindlichkeit an einem Dichteprüfverfahren und Prüfkammer**
Process for reducing the measuring cycle time and for increasing the measuring pressure sensitivity of a leak-testing method, and associated test container
Procédé de réduction du temps de mesure et d'augmentation de la sensibilité de mesure de pression dans un système d'essai d'étanchéité et chambre d'essai associée

(30) Priorität: 27.01.1989 DE 3902435
(43) Veröffentlichungstag der Anmeldung: 01.08.1990
(60) Teilanmeldung: 94114412.3
(73) Patentinhaber: Lehmann, Martin, CH-5610 Wohlen 1 (CH)
(72) Erfinder: Lehmann, Martin, CH-5610 Wohlen 1 (CH)
(74) Vertreter: Troesch, Jacques J., Dr. sc. nat.

(56) Entgegenhaltungen:
- CH-A- 395 584
- US-A- 3 177 704
- US-A- 3 517 548
- PATENT ABSTRACTS OF JAPAN vol. 7, no. 113 (P-197)(1258) 18. April 1983 & JP-A-58 34 337

## Beschreibung

Die vorliegende Erfindung betrifft ein Verfahren nach dem Oberbegriff von Anspruch 1 sowie eine Prüfkammer nach demjenigen von Anspruch 2.

Verfahren zur Dichteprüfung, bei dem ein zu prüfendes Behältnis einer Druckdifferenz zwischen Innen- und Aussendruck als Anfangsbedingung unterworfen wird und aus einem zeitlichen Verlauf einer von dieser Druckdifferenz abhängigen Druckgrösse auf die Dichtheit des Behältnisses geschlossen wird, sind bekannt. Aus der DE-OS 24 47 578 ist beispielsweise ein derartiges Prüfverfahren bekannt, um die Leckage von Behältnissen in der Schweissnahtpartie derartiger Behältnisse zu prüfen. Hierzu wird das Behältnis, geöffnet, innen und, entlang wesentlichster Wandungsabschnitte, auch aussen aufgrund der Behältnisöffnung mit demselben Druck beaufschlagt, und es ist um die Schweissnaht herum ein vom genannten druckbeaufschlagten Volumen getrennter Prüfkanal vorgesehen. Es wird die zeitliche Entwicklung des Druckes im genannten Prüfkanal registriert als Mass für die Dichtheit der Schweissnaht.

Aus der DE-OS 21 15 563 ist es bekannt, Nahtstellen von mit Folien verschlossenen Behältnissen dadurch zu prüfen, dass mittels eines Dornes der Behältnisboden durchstochen wird und das Behältnisinnere druckbeaufschlagt wird. Aus Verfolgung des mit Zerstörung der Behältniswandung erstellten Behältnisinnendruckes wird auf dessen Dichte geschlossen.

Aus dem Artikel "Lecksuche mittels Differenzdruck-Messungen" von J.T. Furness, VFI 4/78, ist es allgemein bekannt, Behältnisse durch Beobachtung ihres Innendruckes oder ihres Aussendruckes auf Leckage zu prüfen. Dabei ist ausgeführt, dass, je kleiner ein Volumen ist, worin der messrelevante Druck verfolgt wird, desto grösser die leckagebedingte Druckänderungssensibilität wird.

Aus der US-A-3 517 548 ist es bekannt, starre Behältnisse dadurch auf Dichtheit zu prüfen, dass das durch sie in einer dichten Prüfkammer verdrängte Gasvolumen erfasst wird. Um die Messempfindlichkeit zu erhöhen, wird dabei die Kammer nur geringfügig grösser als das Volumen des zu prüfenden Gegenstandes bzw. Behältnisses gewählt.

Aus der US-A-3 177 704 sowie aus der JP-A-5 834 337 ist es weiter bekannt, verschlossene Behältnisse in einer Prüfkammer auf Dichte dadurch zu prüfen, dass die Prüfkammer gegenüber dem Innern des zu prüfenden Behältnisses auf Unterdruck gelegt wird. Die US-A-3 177 704 prüft dabei starre Druckbehältnisse und führt aus, dass die Messempfindlichkeit erhöht wird, indem das Zwischenvolumen zwischen Prüfkammerwand und Behältnisaussenwand möglichst gering gewählt wird. Demgegenüber prüft die JP-A-5 834 337 mit einer Deckfolie verschlossene Behältnisse, offenbar mit verformbarer Wandung, indem die becherförmigen Behältnisse bodenseitig auf Abstützausformungen an der Prüfkammer abgelegt werden.

Bei diesen Vorgehensweisen werden die Prüfkammern bezüglich des Behältnisinnendruckes auf Unterdruck gelegt. Es kann nun das System der Prüfkammer mit dem zu prüfenden Behältnis von der Unterdruckquelle abgetrennt werden, womit Druckanfangsbedingungen gesetzt sind, und es kann aus dem Druckverlauf im Zwischenvolumen, d.h. dem Behältnisaussenvolumen, zwischen Prüfkammer und Behältnis auf die Dichte des Behältnisses geschlossen werden. Die Prüfzykluszeit pro Behältnis hängt wesentlich von der Grösse des Behältnisaussenvolumens ab, d.h. vom Differenzvolumen zwischen Prüfkammer und Behältnis: Je grösser dieses Differenzvolumen ist, desto länger wird der Prüfzyklus, weil die Evakuierung dieses Differenzvolumens mehr Zeit in Anspruch nimmt.

Zudem bewirkt eine Leckage des Behältnisses vorgegebener Grösse und die entsprechende Strömung vom Behältnisinnern in das Zwischenvolumen bei vorgegebener anfänglicher Druckdifferenz ein desto kleineres auswertbares Signal, je grösser das erwähnte Zwischen- bzw. Behältnisaussenvolumen in der Prüfkammer ist.

Aus der CH-A-395 584 ist es nun bekannt, an einer Transportscheibe Siebhalterungen für zu prüfende Behältnisse vorzusehen, in welche die Behältnisse bezüglich der Scheibenachse radial eingeschoben werden. Darnach werden, axial, Prüfkammerglocken über die Behältnisse in den Siebhalterungen gestülpt und zur Transportscheibe abgedichtet. Der Gefahr, dass, bei Erstellen einer vom Behältnisinnern nach dessen Aeussern gerichteten Druckdifferenz, die Packungsbehältnisse durch Auswölben ihrer Wandungen platzen, wird dadurch entgegengetreten, dass die Kammerwandung so nahe an die Behältniswandung gelegt wird, dass sich letztere vor Platzgefahr an der Kammerwandung abstützen kann.

Ausgehend von einem Verfahren bzw. einer Prüfkammer letztgenannter Art setzt sich die vorliegende Erfindung zum Ziel, die Messzykluszeit zu reduzieren und dabei gleichzeitig die Druckmessempfindlichkeit zu erhöhen.

Dies wird bei der Ausbildung des genannten Verfahrens nach dem kennzeichnenden Teil von Anspruch 1 erreicht, ausgehend von einer Prüfkammer der genannten Art bei deren Ausbildung nach dem kennzeichnenden Teil von Anspruch 2.

Somit geht die Erfindung von der Erkenntnis aus, dass, bei der Prüfung geschlossener Behältnisse mit mindestens teilweise verformbarer Wandung nach dem hier angesprochenen Vorgehen, Prüfzykluszeit und Messempfindlichkeit dadurch verbessert werden können, dass das genannte Zwischenvolumen minimalisiert wird, ohne dass sich aber die Behältniswandung an die Prüfkammerwandung anlegt.

Für das Anlegen des Prüfdruckes ist an den Behältnisaussen raum eine entsprechende Evakuierungs- oder Druckleitung angeschlossen. Bei Prüfung mit Unterdruck und unter Berücksichtigung des minimalisierten Zwischenvolumens und mithin Abstandes zwischen Kammerwandung wird verhindert, dass sich das Behältnis derart auswölbt und z.B. an die Einmündung der Saugleitung anlegt, dass letztere verschlossen wird. In anderen Fällen kann es generell angezeigt sein zu verhindern, dass sich, bei der angesprochenen Prüfung mittels Unterdruck, das Behältnis ganz oder abschnittsweise an die Wandung der Prüfkammer anlegt. Auch sollte möglichst verhindert werden, dass sich das Wandungsmaterial des Behältnisses ausformt und erst unter solcher zusätzlicher Verformung undicht wird.

Durch die erfindungsgemässe Prüfkammer mit einer Siebeinlage, sei dies nur in vorgegebenen Bereichen entlang der Wandung der Kammer, wie um ein Ansaugen der Behältniswandung an eine Saugleitung zu verhindern, oder sei dies entlang der gesamten Kammerinnen- bzw. -seitenwandung, um das Behältnis aufzunehmen, wird seine Formhaltung sichergestellt.

Durch Ausbildung der erfindungsgemässen Prüfkammer nach dem Wortlaut von Anspruch 3 wird erreicht, dass die Prüfkammer in ihrer Formgestaltung möglichst einfach wird und dass ein einmal eingelegtes und geprüftes Behältnis, nach Oeffnen des Verschlussdeckels, ohne weiteres aus der Prüfkammer entfernt werden kann. Das Problem, dass bei formähnlicher Ausbildung des Prüfkammernhohlraumes, bezüglich der Behältnisform, zur Minimalisierung des Behältnisaussenvolumens, die Hohlraumwandung Partien des Behältnisses hintergreifen könnte, womit letzteres nicht mehr ohne weiteres aus der Prüfkammer entfernbar wäre, wird dadurch in einfacher Art und Weise behoben.

Im weiteren wird gemäss Wortlaut von Anspruch 4 vorgeschlagen, dass der Büchsenboden einen gesteuert ins Büchseninnere treibbaren Auswurfkolben umfasst, womit nach erfolgter Dichteprüfung des Behältnisses und nach Entfernen des Verschlussdeckels das geprüfte Behältnis durch Anheben des Auswurfkolbens ausgegeben werden kann.

Für im wesentlichen kegelstumpfförmige Behältnisse, wie Becher der für Joghurt bekannten Art, wird im weiteren gemäss Wortlaut von Anspruch 5 vorgeschlagen, dass die Büchse im wesentlichen kegelstumpfförmig ausgebildet ist.

Die Prüfkammer wird bevorzugterweise gemäss Wortlaut von Anspruch 7 räumlich so angeordnet, dass ihre Oeffnung oben liegt. Damit können zu prüfende Behältnisse unter der Wirkung der Schwerkraft in die Prüfkammer eingelassen und mit Hilfe des Auswurfkolbens nach der Prüfung ausgegeben werden, und insbesondere wird bei der Prüfung von becherförmigen Behältnissen, wie sie für Joghurt eingesetzt werden und welche mittels einer Folie verschlossen sind, eine den normalen Standverhältnissen derartiger Behältnisse entsprechende Belastung der mitzuprüfenden Schweissnaht zwischen Deckfolie und Becher sichergestellt. Diese Schweissnaht kann bei "Auf-dem-Kopfstehen" solcher Behältnisse und "Nach-Untenfliessen" des Gutes kaum zuverlässig auf Dichtheit geprüft werden.

Um im weiteren eine Verschmutzung der Prüfkammer mit Füllgut leckender Behältnisse leicht beheben zu können, wird gemäss Wortlaut von Anspruch 8 vorgeschlagen, in die Kammer eine dichtend verschliessbare Spülmittel-Ablaufleitung einmünden zu lassen, womit die Prüfkammer ohne weiteres gespült werden kann. Die Spülung erfolgt manuell, oder es kann, beispielsweise am Verschlussdeckel, eine dichtend verschliessbare Zuleitung mit endständiger Düse für Spülmittel vorgesehen sein, um die Prüfkammer bei Bedarf zu reinigen.

Bei Vorsehen der Prüfkammer mit einer Spülmittel-Ablaufleitung, die dichtend zu verschliessen ist, wird dabei bevorzugterweise das ohnehin beweglich in der Kammer vorgesehene Organ, nämlich der Auswurfkolben, dazu verwendet, die Leitung zu öffnen bzw. dichtend zu verschliessen, gemäss Wortlaut von Anspruch 9.

Diese Ausbildung wird bevorzugterweise gemäss Wortlaut von Anspruch 10 so realisiert, dass der Abschlusskolben einen Kolbenteller umfasst und die Leitung durch die dem Büchseninneren abgekehrte Seite des Kolbentellers geöffnet bzw. dichtend verschlossen wird, womit erreicht wird, dass während des Auswurfes eines eben geprüften Behältnisses die erwähnte Spülmittel-Ablaufleitung geöffnet wird und bei eingefahrenem Auswurfkolben, somit in Position, wie für die Dichteprüfung, dichtend verschlossen ist.

Eine Mehrzahl solcher Prüfkammern eignet sich ausgezeichnet, um zu einer Prüfanordnung gemäss Anspruch 11 vereinigt zu werden, um eine In-Linie-Prüfung von Behältnissen in der Produktion nach deren Verschliessen auszuführen. Wegen der kurzen Prüfzyklen mit der erfindungsgernässen Prüfkammer können damit sämtliche Behältnisse einer Produktionslinie auf Dichte geprüft werden, was gegenüber Stichprobenprüfungen wesentliche Vorteile mit sich bringt.

Eine derartige erfindungsgemässe Anordnung mehrerer erfindungsgemässer Prüfkammern wird bevorzugterweise als Karussell ausgebildet.

Die erfindungsgemässe Prüfkammer und mithin auch die erfindungsgemässe Anordnung mehrerer solcher Prüfkammern eignen sich insbesondere für die Prüfung gefüllter und verschlossener Kunststoffbecher, wie von Joghurtbechern.

Die Erfindung wird anschliessend beispielsweise anhand von Figuren erläutert.

Es zeigen:
- Fig. 1: schematisch eine Prüfkammer bekannter Art und ihre Verwendung zur Dichteprüfung verschlossener, gefüllter Behältnisse mit sich in einer Behältnisachsrichtung verkleinernder Querschnittsfläche,
- Fig. 2: schematisch, in analoger Darstellung zu Fig. 1, eine erfindungsgemässe Prüfkammer,
- Fig. 3: schematisch, in Längsschnittdarstellung, eine bevorzugte Ausführungsvariante einer erfindungsgemässen Prüfkammer für die Dichteprüfung becherartiger Behältnisse, wie von Joghurtbechern.

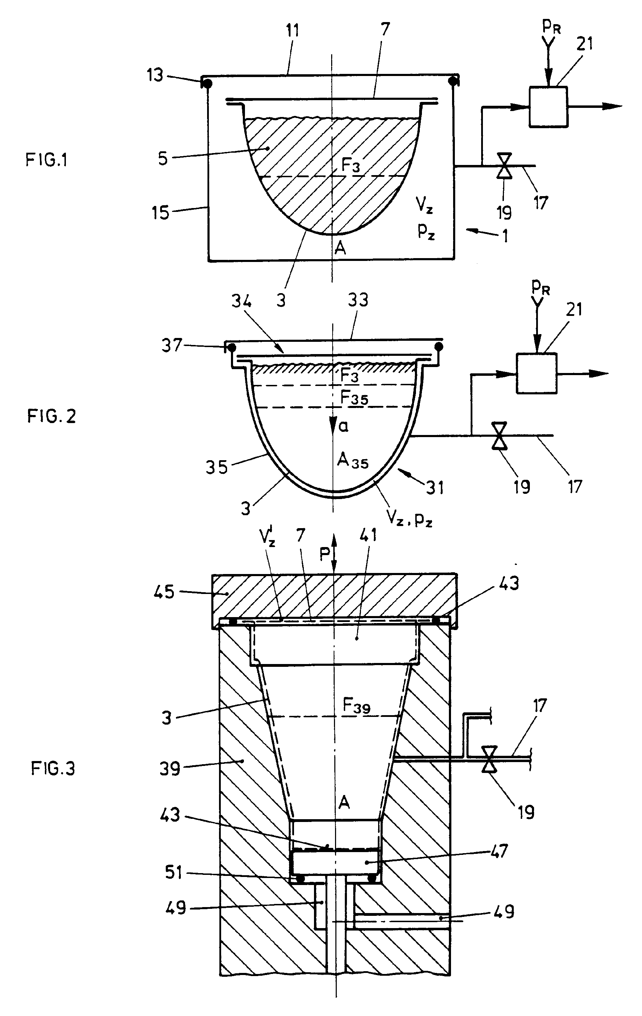

In Fig. 1 ist schematisch eine Prüfkammer 1 dargestellt, wie sie in bekannter Art und Weise auch für die Dichteprüfung verschlossener Behältnisse 3 verwendet wird, welche, in Richtung einer Behältnisachse A betrachtet, sich verkleinernde Querschnittsflächen F₃ aufweisen. Die Behältnisse 3 sind mit Füllgut 5 gefüllt und beispielsweise mit einer Deckfolie 7 verschlossen, welche an ihrer Peripherie mit dem Behältnis 3 verbunden, wie beispielsweise verklebt oder verschweisst sind. Beispielsweise kann es sich bei solchen Behältnissen um Kunststoffbecher handeln, welche mit einer Alufolie 7 verschlossen sind.

Zur Dichteprüfung werden diese Behältnisse 3 in die Prüfkammer 1 eingeführt, die darnach mittels eines Verschlussdeckels 11 und Dichtungen 13 verschlossen wird. Zwischen dem Behältnis 3 und der Prüfkammer, bestehend aus Verschlussdeckel 11 und Kammerbüchse 15, wird ein Zwischenvolumen V_{z} festgelegt, welches auf einen Prüfdruck p_{z} gelegt wird, der vom Druck innerhalb des Behältnisses 3 unterschiedlich ist.

Dies wird, wie in Fig. 1 schematisch angedeutet, über eine Druckbeaufschlagungsleitung 17 mit Ventil 19 realisiert. Nach Druckbeaufschlagung des Zwischenvolumens V_{z} wird das Ventil 19 geschlossen und die Entwicklung des Druckes p_{z} des Zwischenvolumens V_{z}, beispielsweise mittels eines Drucksensors 21, registriert, bevorzugterweise als Differenzdrucksensor ausgebildet, welchem nebst dem Zwischenvolumendruck p_{z} ein Referenzdruck p_{R} zugeführt wird. Es wird als Prüfdruck ein bezüglich des Behältnisinnendruckes kleinerer Druck an das Zwischenvolumen angelegt, womit sich bei Leckage des Behältnisses 3 und nach Verschluss des Ventils 19 wegen des einsetzenden Druckausgleiches ein Druckanstieg im Zwischenvolumen V_{z} ergibt. Für das Anlegen des Prüfdruckes p_{z} an das Zwischenvolumen V_{z} muss Gasvolumen vom Zwischenvolumen V_{z} abgeführt werden, dessen Menge desto grösser ist, je grösser das Zwischenvolumen V_{z} ist.

Das für das Erstellen des Prüfdruckes p_{z} zu fördernde Gasvolumen wirkt sich, bei vorgegebenen Förderleistungen eines der Leitung 17 zugeschalteten Saugorgans (nicht dargestellt), direkt auf die Zeitspanne aus, welche zur Prüfdruckbeaufschlagung nötig ist: Je kleiner dieses Zwischenvolumen V_{z} ist, desto geringer wird die hierzu benötigte Zeit.

Im weiteren ist bei einer vorgegebenen Leckage, bei vorgegebenem Prüfdruck p_{z} und mithin vorgegebener Druckdifferenz von Zwischenvolumen V_{z} und Behältnisinnerem auch das durch das Leck pro Zeiteinheit strömende Gasvolumen gegeben, womit die als Leckagemass registrierte Druckänderung im Zwischenvolumen V_{z} in der Zeit desto grösser wird, je geringer das Zwischenvolumen V_{z} ist.

Um nun diesen Verhältnissen optimal Rechnung zu tragen, wird, wie schematisch in Fig. 2 dargestellt, die Prüfkammer so ausgelegt, dass zwischen ihr und einem eingelegten, zu prüfenden Behältnis ein möglichst kleines Zwischenvolumen definiert wird. Die in Fig. 2 schematisch dargestellte, erfindungsgemässe Prüfkammer 31 umfasst eine einseitig offene Büchse 35 mit Oeffnung 34, wobei sich Querschnittsflächen F₃₅ der Büchse 35, betrachtet von der Oeffnung 34 her, verkleinern. Die Verkleinerung der Querschnittsfläche F₃₅ entlang der Achse A₃₅ entspricht dabei vorzugsweise der Verkleinerung der Querschnittsfläche F₃ eines in die Prüfkammer 31 einzulegenden, zu prüfenden Behältnisses 3, so dass die Wandung des Behältnisses 3 und die Innenwandung der Prüfkammer 31 bei eingelegtem Behältnis 3 in wesentlichen äquidistant zueinander liegen. Damit wird das Zwischenvolumen V_{z} minimal.

Auch an der erfindungsgemässen Prüfkammer 31 ist ein Verschlussdeckel 33 vorgesehen, der mittels schematisch dargestellter Dichtungen 37 nach Einlegen des zu prüfenden Behältnisses 3 die Prüfkammer 31 dichtend verschliesst. Anlegen des Prüfdruckes und Registrierung des Druckverlaufes im Zwischenvolumen V_{z} erfolgt gleich, wie bereits anhand von Fig. 1 erläutert wurde.

In Fig. 3 ist eine bevorzugte Ausführungsvariante der erfindungsgemässen Prüfkammer schematisch dargestellt. Sie ist, als Beispiel, aufgebaut, um im wesentlichen kegelstumpfförmige Behältnisse 3, wie sie beispielsweise für Joghurt verwendet werden, auf Dichtheit zu prüfen.

Ein zu prüfendes Behältnis 3 mit Verschlussfolie 7 ist gestrichelt dargestellt. Die erfindungsgemässe Prüfkammer umfasst eine Büchse 39, welche entsprechend der Aussenkontur des Behältnisses 3 geformt ist. Die Querschnittsfläche der Büchse 39, F₃₉ verjüngt sich in Richtung der Zentralachse A im wesentlichen kegelförmig von einer Büchsenöffnung 41 gegen den Boden 43 der Büchse 39 und definiert einen Hohlraum, der im geometrischen Sinne zum Körper des Behältnisses 3 im wesentlichen ähnlich ist, derart, dass, wenn ein zu prüfendes Behältnis 3 eingelegt wird, zwischen dessen Wandung und der Wandung der Büchse 39 im wesentlichen konstante Abstandsverhältnisse herrschen. Im Oeffnungsbereich 41 der Büchse 39 ist vorzugsweise eine Positionierungs reisrinne für einen bei derartigen Behältnissen ublicherweise vorgesehenen, vorspringenden Rand mit der Deckfolienverschweissung vorgesehen (nicht dargestellt).

Die Prüfkammer umfasst im weiteren einen Verschlussdeckel 45, der getrieben, wie mit dem Doppelpfeil P dargestellt, der Büchse 39 zuführbar bzw. von letzterer wegholbar ist, um mittels Dichtungsorganen 43 die Prüfkammer dichtend zu verschliessen.

Am Boden der Büchse 39 ist ein axial getrieben verschiebbarer Kolben 47 angeordnet, welcher bei Einlegen eines Behältnisses 3 und während seiner Prüfung in der gezeigten Stellung rückgeholt ist und darnach, nach Oeffnen des Verschlussdeckels 45, ausgefahren wird, um das eben geprüfte Behältnis 3 auszustossen.

An der dem Innenraum der Prüfkammer abgekehrten Seite des Kolbens 47 mündet eine Spülmittel-Abflussleitung 49 ein, die bei, wie gezeigt, rückgeholtem Kolben 47 mittels Dichtungsorganen 51 dichtend verschlossen wird. Damit ist die Möglichkeit geschaffen, nach Entfernen eines geprüften Behältnisses 3, das, leckend, Füllgut in die Prüfkammer während der Druckprüfung ausgegeben hat, und nach Ausfahren des Kolbens 47, die Kammer zu spülen, wobei das Spülmittel aus der dann geöffneten Spülmittelabflussleitung 49 ausfliesst. Für das Spülen der Prüfkammer kann allenfalls am Verschlussdeckel 45 eine Zuführleitung, allenfalls mit Düse, für Spülmittel vorgesehen werden (nicht dargestellt).

Bevorzugterweise, und insbesondere in der Anwendung mit Behältnissen, welche mittels einer Abdeckfolie 7 verschlossen sind, wie für Joghurtbecher etc., wird die Prüfkammer räumlich so angeordnet, dass ihre Oeffnung 41 oben liegt. Dadurch wird verhindert, dass Füllgut im Behältnis 3 auf die Deckfolie absinkt, was eine Dichteprüfung auch der Verbindungsnaht, beispielsweise Schweissnaht, zwischen Deckfolie 7 und Behältniswandung beeinträchtigen würde.

Die Prüfkammer gemäss Fig. 3 umfasst, wie wiederum schematisch dargestellt ist, Druckzuführ- und Registrierungsleitungen bzw. Organe, wie sie gemäss Fig. 1 und 2 erläutert wurden.

Für die Dichteprüfung von Behältnissen, wie beispielsweise Joghurt, Rahm etc. in Linie mit der Produktion, d.h. nach Füllen der Behältnisse und deren Verschluss, wobei jedes Behältnis geprüft wird, werden mehrere der beispielsweise in Fig. 3 schematisch dargestellten Prüfkammern zu einer Prüfanlage zusammengefasst, beispielsweise auf einem vorzugsweise horizontalen, um eine vertikale Achse sich drehenden Karusselltisch (nicht dargestellt), so dass in Linie mit der Produktion und bevor die gefüllten und verschlossenen Behältnisse für einen nachmaligen Versand abgestapelt werden, alle Behältnisse der Dichteprüfung in einer erfindungsgemässen Prüfkammer unterzogen werden.

Um dabei bei der angesprochenen Prüfung von Behältnissen mit flexibler Wandung mit Unterdruck zu verhindern, dass sich Bereiche der Behältniswandung an die Innenwandung der Prüfkammer legen, wird erfindungsgemäss eine Siebeinlage (nicht dargestellt) in die Prüfkammer eingelegt, beispielsweise in Form eines unten offenen kegelförmigen Siebschlauches, in welchen das jeweils zu prüfende Behältnis 3 eingelegt wird. Mit Hilfe eines solchen Siebes wird verhindert, dass beim Anlegen von Unterdruck die Behältniswandung sich an die Prüfkammerwandung allenfalls dichtend anlegt.

Gegebenenfalls können weiter Druckverbindungen vorgesehen sein, welche, bei Anlegen der Verschlusspartie mit Folie 7 des Behältnisses 3 an einer entsprechend geformten Ringschulter im Oeffnungsbereich 41 der Prüfkammer, einen Druckausgleich auch zum oberhalb der Deckfolie 7 gelegenen Zwischenvolumen V_{z}, sicherstellen.

## Patentansprüche

1. Verfahren zur Reduzierung der Prüfzykluszeit und zur Erhöhung der Druckmessempfindlichkeit bei der zerstörungsfreien Prüfung eines geschlossenen Behältnisses (3), bei dem in einer Prüfkammer, als Anfangsbedingung, das zu prüfende Behältnis (3) mit mindestens teilweise verformbarer Wandung einer Druckdifferenz zwischen Innen- und vorgegebenem, bezüglich Innendruck tieferem Aussendruck unterworfen wird und aus einem zeitlichen Verlauf des Aussendruckes auf die Dichtheit des Behältnisses geschlossen wird, dadurch gekennzeichnet, dass verhindert wird, dass sich die verformbare Wandung aufgrund der Druckdifferenz nach aussen aufwölbt und damit erst ermöglicht wird, den Zwischenraum zwischen Prüfkammerwand und Behältniswandung minimal auszugestalten.

2. Prüfkammer für die zerstörungsfreie Dichtheitsprüfung eines Behältnisses (3) mit mindestens teilweise verformbarer Wandung und sich in einer Behältnisachsrichtung (A₃₅) verkleinernden Aussenquerschnittsfläche (F₃₅), wobei die Prüfkammer einen verschliessbaren Hohlraum (35) zur Aufnahme des Behältnisses (3) aufweist, an der eine Evakuiereinrichtung (17, 19) zur Erstellung einer Druckdifferenz zwischen Behältnisinnerem und dem zwischen Hohlraumwandung und Behältnis gebildeten Behältnisaussenraum, als Anfangsbedingung, angeschlossen ist sowie eine Druckmesseinrichtung (21) zur Messung einer von der Druckdifferenz und der Behältnisdichtheit abhängigen Druckgrösse (p_{z}) und dabei der Hohlraum der Prüfkammer mindestens im wesentlichen geometrisch der Form des zu prüfenden Behältnisses (3) ähnlich ist, dadurch gekennzeichnet, dass für die Abstützung verformbarer Wandpartien des Behältnisses eine Siebeinlage in der Kammer vorgesehen ist und der Abstand der Hohlraumwandung von der Siebeinlage gleich oder kleiner ist wie der Auswölbungshub der abgestützten, verformbaren Wandpartie, ohne vorgesehene Siebeinlage.

3. Prüfkammer nach Anspruch 2, dadurch gekennzeichnet, dass die Kammer (31) eine einseitig geschlossene Büchse (35, 39) umfasst, deren offene Querschnittsfläche (F₃₅, F₃₉) sich in Richtung (A) gegen den Büchsenboden verkleinert, und dass ein Verschlussdeckel (33, 45) zum dichten Verschliessen der Büchse vorgesehen ist.

4. Prüfkammer nach Anspruch 3, dadurch gekennzeichnet, dass am Büchsenboden ein gesteuert ins Büchseninnere treibbarer Auswurfkolben (47) vorgesehen ist.

5. Prüfkammer nach einem der Ansprüche 3 oder 4, für im wesentlichen kegelstumpfförmige Behältnisse, dadurch gekennzeichnet, dass die Büchse im wesentlichen kegelstumpfförmig ist.

6. Prüfkammer nach einem der Ansprüche 3 bis 5, mit einem zu prüfenden Behältnis, dadurch gekennzeichnet, dass die Büchsenseitenwandung mit im wesentlichen konstantem Abstand bezüglich der Behältniswandung verläuft.

7. Prüfkammer nach einem der Ansprüche 3 bis 6, dadurch gekennzeichnet, dass sie räumlich so angeordnet ist, dass ihre Oeffnung nach oben liegt.

8. Prüfkammer nach einem der Ansprüche 3 bis 7, dadurch gekennzeichnet, dass in den Hohlraum eine dichtend verschliessbare Spülmittelablaufleitung (49) einmündet.

9. Prüfkammer nach Anspruch 8, dadurch gekennzeichnet, dass die Leitung mittels eines Kolbens (47) öffenbar und dichtend verschliessbar ist, der vorzugsweise gleichzeitig als Behältnisauswurfkolben wirkt.

10. Prüfkammer nach Anspruch 9, dadurch gekennzeichnet, dass der Hohlraumboden einen Teller des Kolbens umfasst und die Leitung (49) durch die dem Hohlraum abgekehrte Seite des Kolbentellers geöffnet bzw. dichtend verschlossen wird.

11. Anordnung mit einer Mehrzahl von Prüfkammern nach einem der Ansprüche 3 bis 10 zur in-line-Prüfung der Behältnisse in der Produktion, nach deren Verschliessen.

12. Anordnung nach Anspruch 11, dadurch gekennzeichnet, dass die Prüfkammern auf einem Karussell angeordnet sind.

13. Anwendung der Prüfkammer nach einem der Ansprüche 3 bis 10 oder der Anordnung nach einem der Ansprüche 11, 12, für die Prüfung gefüllter und verschlossener Kunststoffbecher, wie von Joghurtbechern.

## Claims

1. Process for reducing duration of a test-cycle and for raising pressure-sensitivity in non-destructive testing of a closed container (3), in which, as an initial state, the container (3) to be tested, which has an at least partly deformable casing, is subjected in a test chamber to a pressure difference between internal pressure and predetermined external pressure which is lower than the internal pressure and the sealing of the container is considered in dependency of the timely course of the external pressure, characterized in that arching towards the outside of the deformable casing as a result of the pressure difference is prevented and it therefore becomes possible to design a minimal intermediate space between the test chamber wall and the container casing.

2. Test chamber for non-destructive testing of sealing of a container (3) with at least a partly deformable casing and an outer cross-sectional area (F₃₅) which is reduced in an axial direction (A₃₅) of said container, whereby said test chamber concerned has a hollow zone (35), which can be closed, for uptake of said container (3), to which an evacuation device (17, 19) for producing a pressure difference between an inside of said container and an outer space formed between walling of a hollow zone and said container is connected, for a starting state, and a device (21) for measuring a pressure-intensity (P_{z}) which depends on a pressure difference and sealing of said container and furthermore a hollow zone of said testing chamber is at least substantially geometrically similar to a form of a container (3) to be tested, characterized in that a filtering screen inset is provided in said chamber to support deformable part of the container and the distance of the walling of the hollow zone from the filtering screen inset is identical to or less than arching of supported parts of casing without the provided filtering screen inset.

3. Test chamber according to claim 2, characterized in that a chamber (31) includes a sleeve (35, 39), which is closed on one side, and which open cross-sectional area (F₃₅, F₃₉) decreases in a direction (A) away from a base of said sleeve, and a cover (33, 45) is provided for sealed closure of said sleeve.

4. Test chamber according to claim 3, characterized in that at the base of the sleeve, there is provided a push-piston (47) which is controlled drivable into the inside of the sleeve.

5. Test chamber according to claim 3 or claim 4, for substantially truncated-cone-shaped containers, characterized in that said mechanical-sleeve is substantially truncated-cone-shaped.

6. Test chamber according to any one of claims 3 to 5, with a container to be tested, characterized in that the walling on a side of the sleeve runs at a substantially constant distance from casing of the container.

7. Test chamber according to any one of claims 3 to 6, characterized in that the test chamber is disposed such that its opening faces upwards.

8. Test chamber according to any one of claims 3 to 7, characterized in a sealing closable channel (49) for a rinsing agent, which opens into the hollow zone.

9. Test chamber according to claim 8, characterized in that the channel can be opened and sealably closed by means of a piston (47) which preferably acts as well as a container-arching piston.

10. Test chamber according to claim 9, characterized in that the base of the hollow zone surrounds a disk of the piston and the channel (49) is opened or sealably closed by means of the side of the piston facing away from the hollow zone.

11. Arrangement with a number of test chambers according to any one of claims 3 to 10, for in-line testing of containers from relevant production, after said containers have been closed.

12. Arrangement according to claim 11, characterized in that the test chambers are disposed on a carousel.

13. Use of a test chamber according to any of claims 3 to 10 or an arrangement according to any one of claims 11 and 12, for testing filled and closed plastic beakers such as those produced to contain yoghurts.

## Revendications

1. Procédé pour réduire le temps de cycle de contrôle et pour augmenter la sensibilité de mesure de pression lors du contrôle sans destruction d'un récipient fermé (3), selon lequel, comme condition initiale, le récipient à contrôler (3) présentant une paroi au moins en partie déformable est soumis dans une chambre de contrôle à une différence de pression entre la pression interne et une pression externe prédéfinie inférieure à la pression interne, et à partir d'une courbe dans le temps de la pression externe, on déduit l'étanchéité du récipient, caractérisé en ce qu'on empêche que la paroi déformable ne se bombe vers l'extérieur en raison de la différence de pression, ce qui permet de prévoir un espace intermédiaire minimal entre la paroi de la chambre de contrôle et la paroi du récipient.

2. Chambre de contrôle pour le contrôle d'étanchéité sans destruction d'un récipient (3) présentant une paroi au moins en partie déformable et une surface de section transversale extérieure (F₃₅) qui va en diminuant dans un sens d'axe de récipient (A₃₅), étant précisé que la chambre de contrôle comporte une cavité apte à être fermée (35) destinée à recevoir le récipient (3), à laquelle sont raccordés un dispositif à faire le vide (17, 19) destiné à installer une différence de pression entre l'intérieur du récipient et l'espace extérieur du récipient défini entre la paroi de la cavité et le récipient, comme condition initiale, et un dispositif de mesure de pression (21) destiné à mesurer une grandeur de pression (p_{z}) qui est fonction de la différence de pression et de l'étanchéité du récipient, et étant précisé que la cavité de la chambre de contrôle est au moins sensiblement semblable, géométriquement, à la forme du récipient à contrôler (3), caractérisée en ce qu'une garniture filtrante est prévue dans la chambre pour soutenir les parties de paroi déformables du récipient, et l'écartement entre la paroi de la cavité et la garniture filtrante est inférieur ou égal à la course de bombement de ladite partie de paroi déformable soutenue, sans garniture filtrante.

3. Chambre de contrôle selon la revendication 2, caractérisée en ce que la chambre (31) comprend une boîte (35, 39) fermée d'un côté, dont la surface de section transversale ouverte (F₃₅, F₃₉) va en diminuant dans le sens (A), en direction du fond de la boîte, et en ce qu'il est prévu un couvercle de fermeture (33, 45) pour la fermeture étanche de la boîte.

4. Chambre de contrôle selon la revendication 3, caractérisée en ce qu'il est prévu, au fond de la boîte, un piston d'éjection (47) apte à être poussé de façon commandée dans l'intérieur de la boîte.

5. Chambre de contrôle selon l'une des revendications 3 ou 4, pour des récipients sensiblement tronconiques, caractérisée en ce que la boîte est sensiblement tronconique.

6. Chambre de contrôle selon l'une des revendications 3 à 5, contenant un récipient à contrôler, caractérisée en ce que la paroi latérale de la boîte s'étend suivant un écartement sensiblement constant par rapport à la paroi du récipient.

7. Chambre de contrôle selon l'une des revendication 3 à 6, caractérisée en ce qu'elle est disposée dans l'espace de telle sorte que son ouverture se trouve en haut.

8. Chambre de contrôle selon l'une des revendications 3 à 7, caractérisée en ce qu'une conduite d'écoulement de produit de rinçage (49) apte à être fermée de façon étanche débouche dans la cavité.

9. Chambre de contrôle selon la revendication 8, caractérisée en ce que la conduite est apte à être ouverte et fermée de façon étanche à l'aide d'un piston (47) qui agit en même temps, de préférence, comme un piston d'éjection de récipient.

10. Chambre de contrôle selon la revendication 9, caractérisée en ce que le fond de la cavité contient un plateau du piston, et la conduite (49) est ouverte et fermée de façon étanche par le côté du plateau de piston opposé à la cavité.

11. Dispositif formé d'une multiplicité de chambres de contrôle selon l'une des revendications 3 à 10, pour le contrôle en ligne des récipients pendant la production, après leur fermeture.

12. Dispositif selon la revendication 11, caractérisé en ce que les chambres de contrôle sont disposées sur un carrousel.

13. Application de la chambre de contrôle selon l'une des revendications 3 à 10 ou du dispositif selon l'une des revendications 11, 12 pour le contrôle de gobelets en matière plastique remplis et fermés tels que des pots de yaourt.
